# EUROPÄISCHE PATENTSCHRIFT

(11) **EP 2 808 660 B1**
(45) Veröffentlichungstag und Bekanntmachung des Hinweises auf die Patenterteilung: **28.11.2018**
(21) Anmeldenummer: 14401066.7
(22) Anmeldetag: 27.05.2014
(51) Int. Cl.: G01G 21/28

(54) **Gehäuse für eine Wägevorrichtung**
Housing for a weighing device
Boîtier pour un dispositif de pesage

(30) Priorität: 31.05.2013 DE 102013105647
(43) Veröffentlichungstag der Anmeldung: 03.12.2014
(60) Teilanmeldung: 18199829.5
(73) Patentinhaber: WIPOTEC GmbH, 67657 Kaiserslautern (DE)
(72) Erfinder: Schulzki, Alexander, 67705 Stelzenberg (DE); Rübel, Andreas, 67737 Olsbrücken (DE)
(74) Vertreter: Eder, Thomas

(56) Entgegenhaltungen:
- JP-A- 2002 107 219
- JP-A- 2012 013 465

## Beschreibung

Die Erfindung betrifft ein Gehäuse für eine Wägevorrichtung.

Gehäuse für Wägevorrichtungen sind in vielfältiger Form bekannt. Bakannte Gehäuse für Wägevorrichtungen bestehen häufig aus einer Bodenplatte, auf welcher die Wägevorrichtung angeordnet ist. Die Wägevorrichtung kann beispielsweise einen Sensor umfassen, der nach dem Prinzip der elektromagnetischen Kraftkompensation arbeitet. Derartige Kraftsensoren weisen üblicherweise einen Roberval-Lenkermechanismus auf, der erforderlichenfalls mit einem oder mehreren Übersetzungshebeln verbunden ist. Die zu erfassende Lastkraft wirkt auf den beweglichen Teil des Roberval-Mechanismus, der mit dem ersten Übersetzungshebel verbunden ist. Am Ende des letzten Hebels ist eine Spule angeordnet, die in einem Magnetfeld auf einer konstanten Höhenposition gehalten wird. Hierzu wird die am letzten Hebel angeordnete Spule mit einem Strom beaufschlagt, der so geregelt wird, dass bei der aktuell wirkenden Lastkraft die vorbestimmte Höhenposition des letzten Hebels konstant gehalten wird. Damit ist der Wert des Stroms durch die Spule ein Maß für die detektierte Lastkraft. Sämtliche Komponenten, die zur Erfassung der Lastkraft erforderlich sind, also der Sensor, die Regelelektronik und gegebenenfalls eine Einrichtung zur Verarbeitung des oder der erfassten Messwerte, können auf der Bodenplatte des Gehäuses angeordnet sein. Das Gehäuse ist üblicherweise mittels eines Gehäuseoberteils, das die Oberseite der Bodenplatte abdeckt, zum Schutz gegen Umwelteinflüsse, wie insbesondere Staub und Feuchtigkeit, im Wesentlichen dicht ausgebildet.

Aus dem Gehäuse müssen jedoch einerseits ein Lastträgerarm und andererseits die Kontakte zur Abgabe der elektrischen bzw. elektronischen Messsignale herausgeführt sein. Der Lastträgerarm wird üblicherweise an der Oberseite bzw. Deckelseite des Gehäuses über einen Durchbruch herausgeführt. Der Durchbruch wird mittels einer Dichtung ebenfalls gegen Umwelteinflüsse abgedichtet. Als Dichtung kommen dabei insbesondere Labyrinthdichtungen in Frage, wobei ein erstes Dichtungsteil im Durchbruch des Gehäuses oder, den Durchbruch umgebend, an der Oberseite des Gehäuses angeordnet wird. Dieses erste Dichtungsteil wird von dem Lastträgerarm möglichst berührungsfrei durchgriffen. Der Lastträgerarm ist in diesem Fall mit einem zweiten Dichtungsteil verbunden, welches zusammen mit dem ersten Dichtungsteil einen in einem vertikalen Schnitt labyrinthartigen Ringraum ausbildet. Hierdurch wird eine berührungsfreie und damit keinerlei Kraftnebenschluss bewirkende Abdichtung des Durchbruchs im Gehäuse zur Durchführung des Lastträgerarms erreicht.

Kabeldurchführungen oder Steckkontakte für das Übertragen der elektrischen Messsignale aus dem Gehäuse können an der Unterseite des Gehäuses, das heißt an der Unterseite der Bodenplatte, vorgesehen sein.

Solche aus einem Gehäuse und einer darin angeordneten Wägevorrichtung bestehende Einheiten werden im Rahmen der vorliegenden Beschreibung als Wägezellen bezeichnet.

Derartige Wägezellen werden häufig in komplexe Wägeeinrichtungen, beispielsweise Mehrspurwägevorrichtungen, eingebaut. Hierzu werden die Wägezellen üblicherweise mit ihrer Bodenplatte auf einem Maschinengestell der komplexen Wägeeinrichtung montiert.

Zur Abdichtung derartiger Gehäuse für Wägevorrichtungen, die aus einer Bodenplatte und einem topf- oder wannenförmigen Gehäuseoberteil bestehen, sind verschiedene Methoden bekannt. Es ist beispielsweise möglich, die beiden Gehäuseteile zu verschweißen, zu verkleben oder durch zwischen den Gehäuseteilen angeordnete Dichtelemente möglichst hermetisch dicht abzuschließen. Als Dichtung kommen dabei Flachdichtungen oder Rundschnurdichtungen (O-Ringe) zum Einsatz, die zwischen dem Gehäuseoberteil und der Oberseite der Grundplatte angeordnet werden (siehe z.B. JP 2002-107219 A oder JP 2012-13465 A).

Derartige Flachdichtungen bzw. Rundschnurdichtungen werden bei der Montage der Wägezelle, d.h. dem Verbinden der beiden Gehäuseteile, mit einer definierten Kraft beaufschlagt und dabei elastisch verformt. Bedingt durch diese Verformung und durch Alterungsprozesse des Materials der Dichtungen oder durch Verschleiß, beispielsweise hervorgerufen durch den Kontakt mit aggressiven Medien, verlieren die Dichtelemente häufig früher oder später ihre Dichtwirkung. Der aktuelle Zustand des Dichtelements und somit die Dichtwirkung ist im montierten Zustand der Gehäuseteile nur schwer erkennbar, da die Dichtelemente üblicherweise vollständig zwischen den zu dichtenden Gehäuseteilen angeordnet sind. Beispielsweise kann das Gehäuseoberteil mit seinen Seitenwandungen die Außenseiten der Bodenplatte umgreifen und zwischen der Innenseite der Seitenwandung und der Außenseite der Bodenplatte das Dichtelement vorgesehen sein. Zur seitlichen Anpressung kann dann die Seitenwandung des Gehäuseoberteils durch seitlich vorgesehene, horizontal verlaufende Schraubverbindungen mit der Bodenplatte verbunden sein. Alternativ kann die Seitenwandung des Gehäuseoberteils im unteren Bereich auch seitlich nach außen oder innen umgebogen und von oben oder unten mit der Bodenplatte verschraubt sein, wobei das Dichtelement zwischen dem umgebogenen Wandungsteil und der Oberseite der Bodenplatte vorgesehen ist. Da das Dichtelement in diesen Fällen von außen nicht sichtbar und damit dessen Zustand ohne eine Demontage des Gehäuses nicht überprüfbar ist, wird eine mangelnde Dichtwirkung häufig nicht erkannt und erst bei Eintritt eines funktionellen Schadens an der Wägezelle festgestellt.

Um eine derartige Beschädigung der Wägezelle zu vermeiden, können beispielsweise die Montageschrauben in bestimmten vorgegebenen zeitlichen Abständen nachgezogen werden, um die ursprüngliche Anpresskraft auf das Dichtelement wieder herzustellen. Alternativ kann selbstverständlich auch das Dichtelement in vorgegebenen zeitlichen Abständen ausgetauscht werden. Hierzu ist jedoch eine zumindest teilweise Demontage der Wägezelle erforderlich, die üblicherweise nur im Herstellerwerk erfolgen sollte, um die geforderte Genauigkeit und Zuverlässigkeit der Wägezelle zu gewährleisten.

Zur Überprüfung des Zustandes einer Kraftmessvorrichtung ist in der EP 2 130 007 B1 ein Verfahren beschrieben, bei dem der Innenraum der Wägezelle mit einem Gas gefüllt wird. Zur Erkennung von Leckagen wird der Zustand der Gasfüllung innerhalb des Wägezellengehäuses überwacht. Dies ist jedoch technisch aufwändig und teuer.

Zudem besteht in vielen Fällen das Problem, das Gehäuse der Wägezelle gegenüber einem Trägerelement, beispielsweise einem Maschinengestell, abzudichten. Dies ist immer dann sinnvoll und erforderlich, wenn die Wägezelle Kabelabgänge durch die Bodenplatte nach unten oder an der Unterseite der Bodenplatte herausgeführte Steckkontakte für das Abführen von Messsignalen oder das Zuführen von Steuersignalen aufweist.

Der Erfindung liegt daher die Aufgabe zu Grunde, ein Gehäuse für eine Wägevorrichtung zu schaffen, bei dem der Innenraum des Gehäuses zwischen einer Bodenplatte und einem Gehäuseoberteil auf einfache Weise und langzeitstabil gegenüber der Umgebung abgedichtet ist. Gleichzeitig soll bei einer Montage des Gehäuses auf einem Trägerelement das Gehäuse gegenüber dem Trägerelement abgedichtet werden.

Die Erfindung löst diese Aufgabe mit den Merkmalen des Patentanspruchs 1.

Das erfindungsgemäße Gehäuse für eine Wägevorrichtung, das mit einem Trägerelement verbindbar ist, weist eine Bodenplatte auf, auf der die Wägevorrichtung montierbar ist oder welche mit der Wägevorrichtung oder einer Komponente der Wägevorrichtung einstückig ausgebildet ist. An der Unterseite des Gehäuses ist ein umlaufendes elastisches Dichtelement angeordnet. Das Dichtelement ist so ausgebildet, dass ein umlaufender Ringspalt zwischen dem äußeren Umfangsbereich der Unterseite der Bodenplatte und der Oberfläche des Trägerelements bei einem Montieren des Gehäuses auf die Oberfläche mit einer definierten, auf die Unterseite der Bodenplatte und die Oberseite des Trägerelements wirkenden Anpresskraft abgedichtet wird. Damit sind Kabeldurchführungen durch die Bodenplatte in das Maschinengestell oder elektrische Kontakte, die an der Unterseite der Bodenplatte vorgesehen sind, im montierten Zustand von Gehäuse und Trägerelement gegen Umwelteinflüsse geschützt.

Das Dichtelement ist dabei so ausgebildet, dass es bei der Montage durch die Beaufschlagung mit der Anpresskraft zwischen der Unterseite der Bodenplatte und der Oberfläche des Trägerelements elastisch deformiert wird. Das Dichtelement besteht aus einem elastischen Material, beispielsweise aus einem elastischen Kunststoff, wie Silikon. Die Elastizität des Materials und die Geometrie des Dichtelements können dabei so aufeinander abgestimmt werden, dass eine ausreichende Dichtwirkung gewährleistet ist. Das Material des Dichtelements kann dem Anwendungsfall angepasst sein. Beispielsweise kann bei Anwendungsfällen im Lebensmittelbereich ein Material verwendet werden, das eine entsprechende Eignung oder Zulassung durch die zuständigen Behörden besitzt.

Des Weiteren kann ein magnetisch- und oder elektrisch leitendes Material für das Dichtungselement verwendet werden, um die Dichtung zusätzlich gegenüber elektromechanischen Strahlungen dicht zu gestalten und die elektromagnetische Verträglichkeit der im Gehäuse vorgesehene Wägevorrichtung bzw. der aus dem Gehäuse und der Wägevorrichtung bestehende Wägezelle, zumindest im montierten Zustand von Gehäuse und Trägerelement, zu gewährleisten.

Das Gehäuseoberteil des Gehäuses umgreift im montierten Zustand der beiden Gehäuseteile, also der Bodenplatte und des Gehäuseoberteils, die Bodenplatte über den gesamten Umfang mit einer umlaufenden Seitenwandung, wobei die untere Stirnfläche der Seitenwandung im montierten Zustand des Gehäuses auf dem Trägerelement einen über den Außenumfang der Bodenplatte hinausragenden Bereich des Dichtelements zur Abdichtung der Seitenwandung gegenüber der Bodenplatte mit einer definierten Anpresskraft beaufschlagt.

Somit ist durch die Verwendung des einzigen Dichtelements sowohl eine Abdichtung des Gehäuses bzw. der Bodenplatte gegenüber dem Trägerelement als auch eine Abdichtung des Gehäuseoberteils gegenüber der Bodenplatte und damit eine Abdichtung des Gehäuseinneren gewährleistet.

Zudem ist im montierten Zustand des Gehäuses ein vollständiger Schutz der Bodenplatte vor aggressiven Medien gewährleistet, da die Bodenplatte an allen Seiten vom Gehäuseoberteil umgriffen und mittels des Dichtelement vollständig gegenüber der Umgebung abgeschottet ist. Die Bodenplatte kann hierdurch aus demselben Material gefertigt werden, aus dem auch der Kraftsensor der Wägevorrichtung besteht, beispielsweise aus Aluminium, auch wenn dieses Material gegenüber Umwelteinflüssen oder gegenüber in bestimmten Anwendungsfällen benutzten oder auftretenden aggressiven Medien empfindlich ist. Dabei ergibt sich der Vorteil, dass zwischen der Bodenplatte und dem Kraftsensor keine thermischen Spannungen infolge unterschiedlicher Temperaturausdehnungskoeffizienten der Materialien auftreten können.

Nach der bevorzugten Ausführungsform der Erfindung ist das Gehäuse so ausgebildet, dass das Gehäuse bzw. die Wägezelle ausschließlich durch eine mechanische Verbindung der Bodenplatte mit dem Trägerelement auf dem Trägerelement montiert wird. Dies kann bevorzugt durch eine Schraubverbindung geschehen. Das Gehäuseoberteil kann dann ebenfalls über eine mechanische Verbindung ausschließlich mit der Bodenplatte verbunden sein, beispielsweise durch Verschrauben.

Damit kann das auf dem Trägerelement montierte Gehäuse bzw. die komplette Wägezelle durch das Demontieren des Gehäuseoberteils geöffnet werden, ohne dass die Wägevorrichtung vom Trägerelement demontiert werden müsste. Die Abdichtung zwischen der Unterseite der Bodenplatte und der Oberseite des Trägerelements bleibt dabei erhalten.

In der bevorzugten Ausführungsform der Erfindung ist das Dichtelement am Außenumfang eines Trägerteils vorgesehen, wobei das Trägerteil als Trägerplatte ausgebildet sein kann. Hierdurch ergibt sich eine ausreichende mechanische Stabilisierung des Dichtelements hinsichtlich seiner Form. Insbesondere wird der Verlauf des ringförmigen Dichtelements hinsichtlich der gewünschten Form des Rings stabilisiert. Das Dichtelement muss dann nicht bei der Montage des Gehäuses auf dem Maschinengestell bzw. dem Trägerelement entsprechend dem Verlauf des Umfangs bzw. des Randbereichs des Gehäuses bzw. der Bodenplatte ausgerichtet werden, da die Form des Dichtelements hinsichtlich des Umfangsverlaufs durch das Trägerteil stabil gehalten wird. Es muss allenfalls das Gehäuse gegenüber der Kombination bzw. dem Modul aus Trägerteil und Dichtelement ausgerichtet werden, wenn das Modul nicht mit der Bodenplatte verbunden sind.

Das Trägerteil kann nach einer Ausgestaltung der Erfindung so ausgebildet sein, dass es mit einem umlaufenden Randbereich oder mit Teilbereichen des Randbereichs in das Dichtelement eingreift, wobei das Dichtelement vorzugsweise so am Trägerteil vorgesehen ist, dass es in der Beaufschlagungsrichtung durch die Bodenplatte beidseitig über den Randbereich des Trägerteils hinausragt.

Durch das Eingreifen des Dichtelements ergibt sich auch eine Stabilisierung des Querschnitts des Dichtelements, gegenüber einer vertikalen Beaufschlagung des Dichtelements mit der Anpresskraft, die von der Unterseite des äußeren Randbereichs der Bodenplatte und der unteren Stirnseite der Seitenwandungen des Gehäuseoberteils auf die Oberseite des Dichtelements und von der Oberfläche des Trägerteils auf die Unterseite des Dichtelements ausgeübt wird. Hierdurch kann ein relativ weiches und hochelastisches Dichtungsmaterial verwendet werden, ohne dass die Gefahr besteht, dass das Dichtelement bei der Montage so weit deformiert wird, dass die Dichtwirkung infolge von Materialverwerfungen verloren geht, beispielsweise dadurch, dass Falten im Dichtbereich entstehen.

Des Weiteren ergibt sich hierdurch generell eine Stabilisierung des Dichtelements gegenüber bei der Montage des Gehäuses auf dem Trägerelement oder im montierten Zustand auftretenden Querkräften. Ein mechanisches Kriechen des Dichtmaterials wird verhindert.

Das Trägerteil kann im Randbereich oder in den Teilbereichen des Randbereichs Durchbrüche aufweisen, in welche entsprechende Bereiche des Dichtelements zur Fixierung des Dichtelements am Trägerteil eingreifen. Das Befestigen des Dichtelements am Trägerteil kann bei einem separaten Herstellen der beiden Einzelteile dadurch erfolgen, dass das entsprechende Ausnehmungen (Teilnuten) oder eine umlaufende Ausnehmung an der Innenwandung aufweisende ringförmige Dichtelement mit den Ausnehmungen bzw. der Nut auf den äußeren Rand des Trägerteils aufgeschoben wird.

Nach einer Ausgestaltung der Erfindung kann auch zunächst das Trägerteil hergestellt werden, welches dann an seinem Außenumfang mit dem Material des Dichtelements umspritzt wird. Hierdurch ergibt sich eine feste Verbindung zwischen dem Dichtelement und dem Trägerteil.

Das Trägerteil wird aus einem ausreichend festen bzw. starren Material hergestellt, um eine ausreichende Stabilisierung des Verlaufs des ringförmigen Dichtelements zu gewährleisten. Insbesondere kann das Trägerteil aus einer Metallplatte oder einem Metallblech hergestellt werden, beispielsweise mittels eines Stanz- oder Laserschneidverfahrens. Hierdurch können enge Toleranzen eingehalten werden.

Nach einer bevorzugten Ausführungsform der Erfindung wird das Trägerteil mit dem daran angeordneten Dichtelement so an der Unterseite des Gehäuses angeordnet, dass im montierten Zustand von Gehäuseoberteil und Bodenplatte eine ausreichende Abdichtung der Seitenwandung des Gehäuseoberteils gegenüber der Bodenplatte und damit eine ausreichende Abdichtung des Gehäuseinneren gegenüber der Umgebung auch ohne das Vorhandensein einer Anpresskraft zwischen dem Gehäuse und dem Trägerelement gewährleistet ist.

Hierzu wird man das Trägerteil ausreichend biegesteif ausbilden, so dass bei der Beaufschlagung des Dichtelements durch die untere Stirnseite der Seitenwandungen des Gehäuseoberteils eine ausreichende Abdichtung möglich ist. Das Trägerteil muss hierzu in der Lage sein, das Dichtelement in vertikaler Richtung (bezogen auf die Unterseite der Bodenplatte) derart zu fixieren, dass eine ausreichende Anpresskraft zwischen dem Dichtelement und der Stirnseite der Seitenwandung des Gehäuseoberteils gewährleistet ist.

Das Trägerteil wird zur Erzeugung der erforderlichen Dichtkräfte zwischen der Stirnseite der Seitenwandung und dem Dichtelement mit der Unterseite der Bodenplatte mechanisch, vorzugsweise lösbar, verbunden, beispielsweise durch Verschrauben.

Nach einer Ausgestaltung der Erfindung weist das Trägerteil einen oder mehrere Durchbrüche auf, welche von an der Unterseite der Bodenplatte ausgebildeten Flanschvorsprüngen durchgriffen werden, wobei die Flanschvorsprünge Anlageflächen aufweisen, die im montierten Zustand des Gehäuses auf dem Trägerelement anliegen. Das Dichtelement ist dabei in Bezug auf die Flanschvorsprünge so dimensioniert (d.h, die Geometrie und das Material sind so gewählt), dass es im montierten Zustand des Gehäuses auf dem Trägerelement eine die Dichtfunktion gewährleistende elastische Deformation aufweist.

Die Flanschvorsprünge gewährleisten somit einen exakt definierten Ringspalt zwischen der Unterseite des Gehäuses und der Oberfläche des Trägerelements in demjenigen Bereich, in welchem das Dichtelement die Abdichtung bewirkt. Die Flanschvorsprünge und das Dichtelement sind so aufeinander abgestimmt, dass sich im fest montierten Zustand von Gehäuse und Trägerelement eine definierte Deformation ergibt. Damit kann eine Überlastung des Dichtelements bei der Montage durch unzulässig hohe Anpresskräfte vermieden werden. Der oder die Flanschvorsprünge gewährleisten somit unabhängig von einer Montagekraft, mit welcher das Gehäuse mit dem Trägerelement verbunden wird (solange der Flansch an der Oberseite des Trägerelements anliegt) eine im Wesentlichen konstante, definierte Anpresskraft, die auf das Dichtelement wirkt.

Nach einer bevorzugten Ausgestaltung der Erfindung sind die Bodenplatte, das Dichtelement und das Trägerteil derart ausgebildet und so an der Unterseite des Gehäuses angeordnet, dass das Gehäuse im montierten Zustand von Gehäuseoberteil und Bodenplatte ausschließlich mittels des Dichtelements auf einer ebenen Oberfläche aufliegt, solange das Gehäuse nicht mit einer zusätzlichen Anpresskraft in Richtung auf die ebene Oberfläche beaufschlagt wird.

Dabei wird durch die Verbindung des aus dem Dichtelement und dem Trägerteil bestehenden Moduls mit der Bodenplatte zum einen vermieden, dass das Dichtelement verloren gehen kann. Zum anderen wird erreicht, dass das fertig montierte Gehäuse bzw. die Wägezelle bis zur endgültigen Montage auf dem Trägerelement während des bis dahin erforderlichen Handlings gegen Beschädigungen durch ein hartes Aufsetzen auf Unterlagen geschützt ist. Denn das Dichtelement ragt über die Unterseite des Gehäuses bzw. der Bodenplatte hinaus, so dass bei einem Aufsetzen des Gehäuses bzw. der Wägezelle auf eine Unterlage ein Aufsetzen auf ein elastisches Material erfolgt. Beschädigungen der Unterseite des Gehäuses, beispielsweise durch Verkratzen, werden so vermieden. Gleichzeitig werden Stöße beim Absetzen des Gehäuses bzw. der Wägezelle auf eine Unterlage abgemildert, wodurch die Gefahr einer Beschädigung der gegen mechanische Stöße empfindlichen Sensoren reduziert wird.

Nach einer Ausgestaltung der Erfindung ragt die Seitenwandung des Gehäuseoberteils mit ihrer das Dichtelement beaufschlagenden Stirnseite über die Unterseite des das Dichtelement beaufschlagenden Randbereichs der Bodenplatte hinaus. Hierdurch wird eine sichere Dichtwirkung erreicht, insbesondere wenn das Gehäuse noch nicht auf dem Trägerelement montiert ist und die Unterseite des Dichtelements von der Oberfläche des Trägerelements gegen die Stirnseite der Seitenwandung gepresst wird. Der Querschnitt des Dichtelements kann dadurch einfach gestaltet sein und insbesondere eine im Wesentlichen ebene Oberfläche aufweisen, auf welcher die Unterseite des Randbereichs der Bodenplatte und die Stirnseite der Seitenwandung des Gehäuseoberteils aufliegen.

Nach einer Ausgestaltung der Erfindung kann mit der Bodenplatte zur Montage des Gehäuseoberteils ein Rahmen verbunden oder einstückig mit dieser ausgebildet sein. Das Gehäuseoberteil kann in diesem Fall so mit dem Rahmen verbindbar oder verbunden sein, dass eine für die Dichtwirkung ausreichende Anpresskraft für das Anpressen der Stirnseite der Seitenwandung des Gehäuseoberteils gegen das Dichtelement erzeugbar ist.

Damit ergibt sich der Vorteil, dass ein relativ dünnwandiges Material für das Gehäuseoberteil verwendet werden kann. Die erforderliche Stabilität des Gehäuses wird im montierten Zustand durch den zusätzlichen Rahmen erreicht.

Die Bodenplatte kann innerhalb des Randbereichs, der im montierten Zustand des Gehäuses auf dem Trägerelement gegenüber dem Trägerelement abgedichtet ist (also in einem Bereich der Unterseite der Bodenplatte, der von dem Dichtelement umgeben ist), einen oder mehrere Durchbrüche und/oder einen oder mehrere über die Unterseite der Bodenplatte kontaktierbare elektrische Kontakte, vorzugsweise Steckkontakte aufweisen.

Das Gehäuse gewährleistet dabei durch die gegenüber bekannten Gehäusen zusätzliche Abdichtung des Gehäuses gegenüber dem Trägerelement im Einbauzustand auch eine Abdichtung der Durchbrüche, die beispielsweise für Kabeldurchführungen vorgesehen sind, bzw. einen Schutz der elektrischen Kontakte.

Weitere Ausführungsformen der Erfindung ergeben sich aus den Unteransprüchen. Die Erfindung wird nachfolgend anhand eines in der Zeichnung dargestellten Ausführungsbeispiels näher erläutert. In der Zeichnung zeigen
- Fig. 1: einen Schnitt durch die vertikale Längsmittelebene durch ein auf einem Trägerelement montiertes Gehäuse für eine Wägevorrichtung nach der Erfindung;
- Fig. 2: eine perspektivische Darstellung des Trägerteils mit dem umlaufenden Dichtelement in Fig. 1;
- Fig. 3: eine perspektivische Darstellung eines Teils des Trägerteils der Anordnung in Fig.2; und
- Fig. 4: einen Schnitt entlang der Ebene A-A durch die Wägevorrichtung in Fig. 1.

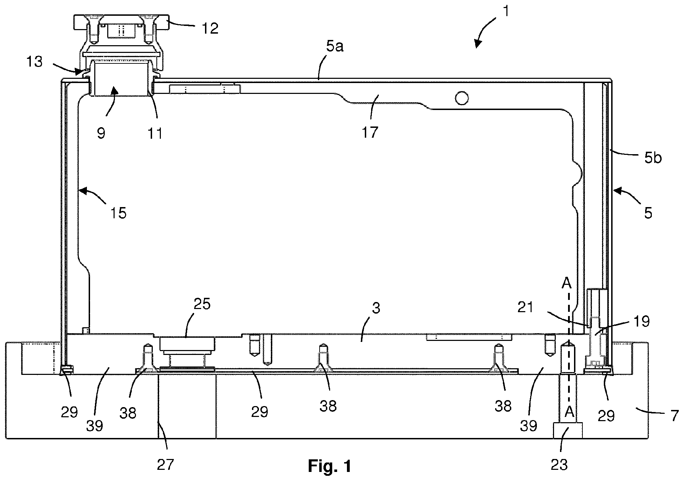

Das in Fig. 1 in einer geschnittenen Seitenansicht dargestellte Gehäuse 1 für eine nicht näher dargestellte Wägevorrichtung besteht aus einer Bodenplatte 3 und einem mit der Bodenplatte 3 verbundenen Gehäuseoberteil 5, welches eine Deckelwandung 5a und eine umlaufende Seitenwandung 5b aufweist. Das Gehäuseoberteil besitzt damit eine im Wesentlichen topfförmige oder wannenförmige Form. Dabei ist es selbstverständlich nicht erforderlich, dass das Gehäuse 5 bzw. das Gehäuseoberteil 5 eine im Wesentlichen quaderförmige Form aufweist, wie dies in Fig. 1 dargestellt ist. Die Bodenplatte muss auch nicht eine im Wesentlichen ebene Struktur aufweisen, sondern kann der Struktur eines Trägerelements 7 angepasst sein, auf dem das Gehäuse 1 montiert werden soll. Bei dem Trägerelement 7 kann es sich beispielsweise um ein Teil eines Maschinengestells einer komplexen Vorrichtung handeln, wie beispielsweise einer Mehrspurwägevorrichtung.

Auf der Bodenplatte 3 können in der Zeichnung nicht näher dargestellte Komponenten einer Wägevorrichtung angeordnet sein, beispielsweise ein elektromechanischer Kraftsensor zur Erfassung einer Lastkraft und weitere mechanische oder elektrische bzw. elektronische Komponenten, die beispielsweise zur Umsetzung der Lastkraft in ein elektrisches Signal bestimmt sind. Bei dem elektrischen Signal kann es sich um ein analoges Signal handeln oder auch um ein Signal, welches digitale Messwerte beinhaltet.

Die Bodenplatte 3 kann auch als integraler Bestandteil einer Komponente der Wägevorrichtung ausgebildet sein, insbesondere als Bestandteil des elektromechanischen Kraftsensors, der beispielsweise nach dem Prinzip der elektromagnetischen Kraftkompensation arbeiten kann.

Das Gehäuse 1 dient dabei dem Zweck, die im Gehäuseinneren vorhandenen Komponenten der Wägevorrichtung gegen Umwelteinflüsse, insbesondere Staub, Schmutz und Feuchtigkeit zu schützen.

Ein nicht näher dargestellter Lastträgerarm der Wägevorrichtung bzw. des Kraftsensors der Wägevorrichtung muss selbstverständlich aus dem Gehäuseinneren des Gehäuses 1 herausgeführt werden. Dies erfolgt über einen Durchbruch 9, der bei der in Fig. 1 dargestellten Ausführungsform des Gehäuses 1 in der Deckelwandung 5a des Gehäuseoberteils 5 ausgebildet ist.

In den Durchbruch 9 ist ein erstes Labyrinthdichtungsteil 11 eingesetzt, dessen oberer Bereich mit dem unteren Bereich eines zweiten Labyrinthdichtungsteils 12 zusammenwirkt, welches an dem nicht näher dargestellten Lastarm des Kraftsensors befestigt sein kann. Das zweite Labyrinthdichtungsteil umgreift mit seinem unteren Bereich den oberen Bereich des ersten Labyrinthdichtungsteils 11 berührungslos, um einen Kraftnebenschluss bei der Einleitung der zu erfassenden Lastkraft zu vermeiden. Zwischen dem unteren Bereich des zweiten Labyrinthdichtungsteils und dem oberen Bereich des ersten Labyrinthdichtungsteils ist somit ein im Querschnitt labyrinthartiger Ringraum 13 geschaffen, welcher das Eindringen von Staub, Schmutz oder übermäßiger Luftfeuchtigkeit in Form von Tröpfchen etc. in das Gehäuseinnere vermeidet oder zumindest reduziert.

An dieser Stelle sei erwähnt, dass der Lastarm auch an der Seitenwandung des Gehäuseüberteils herausgeführt sein kann. Im Gehäuse kann auch eine Wägevorrichtung mit mehreren Lastarmen angeordnet sein, die über einen oder mehrere Durchbrüche im Gehäuse nach außen geführt sein können. Der eine oder die mehreren Lastarme können auch über die Bodenplatte 3 nach außen geführt sein.

Auf der Bodenplatte 3 ist zur Befestigung und Stabilisierung des Gehäuseoberteils 5 ein Rahmen 15 angeordnet, der mehrere Streben oder Rippen 17 umfassen kann. Beispielsweise kann an jeder Längsseite der Bodenplatte 3 eine Strebe 17 vorgesehen sein. Zusätzlich können selbstverständlich auch zwischen den beiden äußeren Streben 17 ein oder mehrere Streben vorgesehen sein. Die längs verlaufenden Streben 17 können dabei durch weitere, quer verlaufende Streben (nicht dargestellt) verbunden sein.

Wie aus Fig. 1 ersichtlich, ist das Gehäuseoberteil 5 auf den Rahmen 15, diesen übergreifend, aufgesetzt. Das Gehäuseoberteil kann dabei durch eine Schraubverbindung über eine oder mehrere Schrauben, welche das Gehäuseoberteil durchgreifen und in jeweils eine Strebe 17 eingreifen, mit dem Rahmen verbunden werden.

Zusätzlich oder stattdessen kann das erste Labyrinthdichtungsteil 11 gleichzeitig als Montageteil zur Fixierung des Gehäuseoberteils 5 am Rahmen 15 dienen. Hierzu kann, wie in Fig. 1 dargestellt, der untere Bereich des im Wesentlichen zylindrischen ersten Labyrinthdichtungsteils 11 ein Gewinde aufweisen, welches in ein komplementäres Gewinde im Rahmen bzw. in der betreffenden Strebe 17 eingreift. Auf diese Weise wird das Gehäuseoberteil 5 mit seiner Deckelwandung 5a gegen die Oberseite der betreffenden Strebe gepresst. Damit erfährt das Gehäuseoberteil 5 eine vertikal wirkende Anpresskraft.

Der Rahmen 15 bzw. die Streben 17 können durch Schraubverbindung mit der Bodenplatte 3 verbunden sein. In Fig. 1 ist zur Verdeutlichung lediglich eine einzige Schraubverbindung dargestellt, wobei eine Schraube 19 die Bodenplatte 3 von unten durchgreift und in einen vertikal verlaufenden Teil einer zugeordneten Strebe 17 eingreift, die hierzu eine Bohrung 21 mit einem Innengewinde aufweist.

Zur Befestigung des Gehäuses 1 auf dem Trägerelement 7 kann ebenfalls eine Schraubverbindung vorgesehen sein. Von dieser ist in Fig. 1 ebenfalls nur eine einzige Schraube 23 schematisch dargestellt, welche das Trägerelement 7 von unten durchgreift und in eine Gewindebohrung in der Unterseite der Bodenplatte 3 eingreift.

Die in Fig. 1 dargestellte Bodenplatte 3 weist des Weiteren eine Steckverbindung 25 auf, die ebenfalls nur schematisch dargestellt ist. Die Steckverbindung 25 weist nicht näher dargestellte Kontakte auf, die mittels eines Steckers kontaktierbar sind, welche durch eine entsprechende Zugangsöffnung 27 zugänglich sind, die im Trägerelement 7 ausgebildet ist. Das Kontaktieren selbst kann selbstverständlich mittels eines Steckers oder anderer geeigneter Mittel erfolgen.

Die Bodenplatte 3 kann anstelle der Steckverbindung 25 oder zusätzlich zu der Steckverbindung 25 auch einen Durchbruch aufweisen, durch welchen entsprechende elektrische Leitungen in das Gehäuseinnere geführt werden können.

Mittels der elektrischen Kontakte bzw. mittels der durch den Durchbruch hindurchgeführten Leitungen können die von dem Kraftsensor erfassten und gegebenenfalls verarbeiteten Messsignale von der Wägezelle, welche durch das Gehäuse 1 und die darin aufgenommene Wägevorrichtung gebildet ist, zu einer weiteren Einheit, beispielsweise einer übergeordneten Verarbeitungseinheit übertragen werden. Gleichzeitig können selbstverständlich hierdurch auch Kommunikationssignale von der übergeordneten Einheit an die Messzelle und umgekehrt übertragen werden. Selbstverständlich kann auf diese Weise auch die Energieversorgung der Wägevorrichtung erfolgen.

Um den Gehäuseinnenraum des Gehäuses 1 und auch das Gehäuse 1 gegenüber dem Trägerelement 7 abzudichten, ist ein Dichtelement 29 vorgesehen, welches umlaufend an der unteren Außenkante der Bodenplatte 3 angeordnet ist. Dieses ringförmige Dichtelement 29 besteht aus einem ausreichend flexiblen, elastischen Dichtungsmaterial, beispielsweise aus einem Kunststoff wie Silikon.

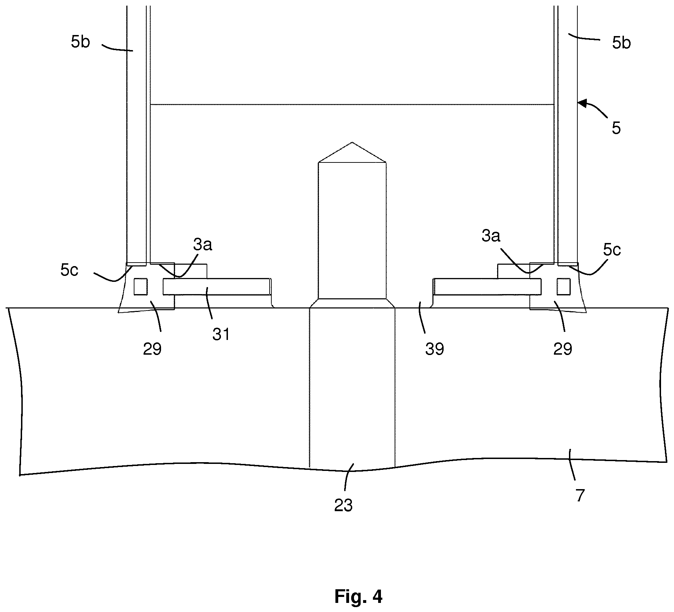

Das ringförmige Dichtelement 29 ist nicht wie bei bisher üblichen Gehäusen für eine Wägevorrichtung zwischen der Unterseite des Gehäuseoberteils und der Oberseite der Bodenplatte angeordnet, um lediglich eine Dichtwirkung zwischen diesen beiden Elementen zu erzeugen. Vielmehr ist das ringförmige Dichtelement 29, wie aus Fig. 4 ersichtlich, die einen vergrößerten Teilschnitt entlang der Ebene A-A in Fig. 1 darstellt, unterhalb des äußeren Randbereichs der Bodenplatte 3 angeordnet und dient zusätzlich auch der Abdichtung eines Raums innerhalb des ringförmigen Dichtelements 29 und unterhalb der Unterseite der Bodenplatte 3 gegen die Oberfläche des Trägerelements 7. Damit ist auch die Steckverbindung 25 bzw. ein Durchbruch für das Hindurchführen von elektrischen Leitungen in der Bodenplatte 3 gegenüber der Umgebung (oberhalb des Trägerelements 7) abgedichtet. Dies gilt selbstverständlich auch für alle anderen gegen Umwelteinflüsse zu schützenden Bestandteile des Gehäuses 1 bzw. der darin aufgenommenen Wägevorrichtung, die an der Unterseite der Bodenplatte 3 innerhalb des ringförmigen Dichtelements 29 vorgesehen oder über diese Gehäuseaußenfläche zugänglich sind.

Das umlaufende Dichtelement 29 ist, wie aus Fig. 4 ersichtlich, so ausgebildet, dass es mit seinem Querschnitt über den äußeren Umfang, das heißt die im Wesentlichen vertikal verlaufende Außenseite der Bodenplatte 3, hinausragt, so dass die untere, umlaufende Stirnseite 5c der Seitenwandung 5b im montierten Zustand des Gehäuses auf dem Trägerelement 7 ebenfalls die Oberseite des umlaufenden Dichtelements 29 beaufschlagt. Die Anpresskraft der Stirnseite 5c der Seitenwandung 5b ist dabei unter anderem abhängig von der Geometrie und dem Material des Dichtelements 29 und der Geometrie der Seitenwandung 5b.

Wird, wie bei der Ausführungsform in Fig. 4, ein Dichtelement 29 mit einem Querschnitt verwendet, dessen Oberseite im Wesentlichen eben ist und horizontal verläuft, so wird die Seitenwandung 5b vorzugsweise so ausgebildet, dass die untere Stirnseite 5c über die Unterseite 3a der Bodenplatte 3 im äußeren Randbereich der Bodenplatte 3 hinausragt. Hierdurch kann sichergestellt werden, dass auch im Bereich der Beaufschlagungsfläche der Stirnseite 5c des Dichtelements 29 durch das Dichtelement 29 eine Anpresskraft erzeugt wird, die zur Gewährleistung der Abdichtung ausreicht, selbst wenn die Unterseite 3a der Bodenplatte 3 den inneren Teil der horizontal verlaufenden Oberseite des ringförmigen Dichtelements 29 beaufschlagt und hierdurch das Dichtelement 29 auch im Bereich der Beaufschlagungsfläche der Stirnseite 5c bereits eine teilweise Deformation bzw. Kompression erfährt.

Damit wird eine sichere Abdichtung der Bodenplatte 3 gegenüber dem Trägerelement 7 erreicht, sowie des Weiteren eine sichere Abdichtung des Gehäuseoberteils 5 gegenüber der Bodenplatte 3 und damit eine sichere Abdichtung des Inneren des Gehäuses 1 gegenüber der Umgebung.

Der Querschnitt des Dichtelements 29 kann, wie in Fig .4 dargestellt, eine untere Lippe aufweisen, um die Dichtwirkung durch eine ausreichende Flexibilität im Bereich der Lippen zur fördern. In Fig. 4 ist das Dichtelement dabei im nicht komprimierten bzw. unter der Anpresskraft deformierten Zustand dargestellt, obwohl die Figur den montierten Zustand von Gehäuse 1 und Trägerelement 7 zeigt.

Das Dichtelement kann auch einen zur durch das Trägerteil 31 definierten Mittelebene symmetrischen Querschnitt aufweisen, beispielsweise mit ebenen, parallelen Ober- und Unterseiten. Hierdurch kann das Dichtelement 29 bzw. das aus der Trägerplatte 31 und dem Dichtelement 29 bestehenden Modul auch um 180º gedreht verwendet werden. Montagefehler lassen sich so vermeiden.

Wie aus den Fig. 1 bis 4 ersichtlich, wird das ringförmige Dichtelement 29 mittels eines ausreichend starr ausgebildeten, beispielsweise plattenförmigen Trägerteils 31 hinsichtlich seiner gewünschten Ringform, die im Wesentlichen der Form des Umfangs der Bodenplatte 3 entspricht bzw. auf diese abgestimmt ist, stabilisiert. Ohne die Stabilisierung durch das Trägerteil 31 müsste das Dichtelement 29 bei der Montage jeweils manuell hinsichtlich des Verlaufs der Ringform ausgerichtet werden. Der Montagevorgang wäre dementsprechend aufwändig und umständlich.

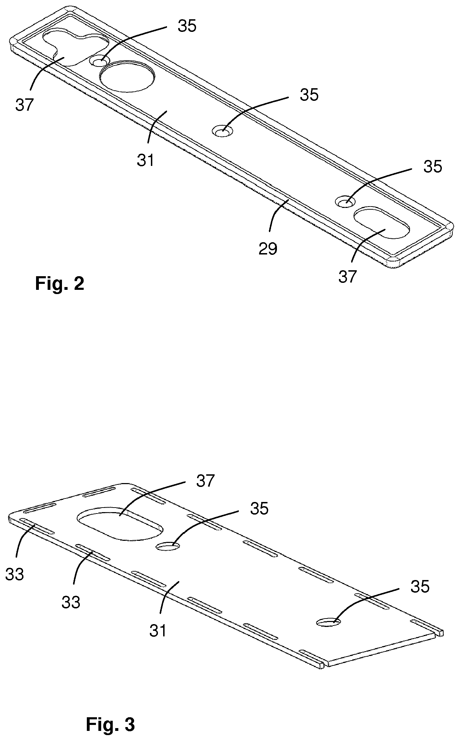

Das in den Fig. 2 und 3 dargestellte Trägerteil 31 (Fig. 3 zeigt den in Fig. 2 rechts dargestellten Abschnitt des Trägerteils 31 in einer um eine vertikale Achse um 180 Grad gedrehten Ansicht) ist im Wesentlichen plattenförmig ausgebildet, wobei das plattenförmige Trägerteil 31 mehrere zentrale Durchbrüche 35, 37 und mehrere Durchbrüche 33 entlang des Randbereichs aufweist. Eine derartige plattenförmige Ausbildung des Trägerteils 31 ist jedoch nicht zwingend erforderlich, um eine Stabilisierung des Dichtelements 29 zu erreichen. Hierfür würde gegebenenfalls auch ein rahmenartiges, ausreichend starres Trägerteil 31 genügen.

Wie aus Fig. 2 ersichtlich, umgibt das ringförmige Dichtelement 29 das Trägerteil 31 an dessen Umfang. Das Trägerteil 31 greift dabei mit seinem äußeren Rand in den radial inneren Bereich des flexiblen Dichtelements 29 ein, wie dies auch aus Fig. 4 ersichtlich ist. Hierdurch erfährt das Dichtelement 29 zusätzlich eine Stabilisierung bei einer Beaufschlagung mit einer Druckkraft in vertikaler Richtung, wie sie bei der Montage und im montierten Zustand des Gehäuses 1 auf dem Trägerelement 7 erzeugt wird. Ein mechanisches Kriechen während der Montage oder im montierten Zustand, d.h während des Betriebs der Wägevorrichtung, wird so vermieden.

Die in Fig. 3 und im Schnitt in Fig. 4 erkennbaren Durchbrüche 33 im äußeren Randbereich des Trägerteils 31 dienen dazu, das Dichtelement 29 sicher auf dem Trägerteil zu fixieren. Hierzu kann das Dichtelement auf den äußeren Randbereich des Trägerteils 31 aufgespritzt bzw. der Randbereich des Trägerteils 31 mit dem Material des Dichtelements 29 umspritzt werden. Damit ergibt sich eine nicht zerstörungsfrei lösbare Verbindung zwischen dem Dichtelement 29 und dem Trägerteil 31. Selbstverständlich kann das Dichtelement 29 jedoch auch separat hergestellt werden und an dessen Innenseite eine umlaufende Nut aufweisen, an deren inneren Seitenwandungen Vorsprünge vorgesehen sind, welche in die Durchbrüche 33 des Trägerteils 31 eingreifen.

Das Trägerteil 31 kann zusammen mit dem Dichtelement 29 mit der Unterseite der Bodenplatte 3 lösbar verbunden werden. Hierzu kann das Trägerteil 31 die zentralen Durchbrüche 35 aufweisen. Das Trägerteil 31 kann damit durch Schrauben 38 (siehe Fig. 1) mit der Unterseite der Bodenplatte 3 verbunden werden.

Hierdurch ergibt sich der Vorteil, dass das fertig montierte Gehäuse 1 mit der darin aufgenommenen Wägevorrichtung einschließlich des Dichtelements 29 bzw. des Moduls bestehend aus Dichtelement 29 und Trägerteil 31 vormontiert werden kann. In diesem vormontierten Zustand wird bereits das Gehäuseinnere abgedichtet, da das Dichtelement 29 mit seiner Oberseite die Unterseite 3a des äußeren Randbereichs der Bodenplatte 3 und die untere Stirnseite 5c der umlaufenden Gehäusewandung 5b des Gehäuseoberteils 5 beaufschlagt.

Dabei ist es selbstverständlich erforderlich, dass das Dichtelement 29 und das Trägerteil 31 so in Bezug auf die Unterseite der Bodenplatte 3 abgestimmt sind, dass sich in diesem montierten Zustand des Gehäuses eine ausreichend hohe Anpresskraft zwischen dem Dichtelement 29 und der Unterseite 3a bzw. der Stirnseite 5c ergibt. Hierzu muss das Trägerteil 31 ausreichend starr ausgebildet sein, um zu vermeiden, dass das Trägerteil 31 infolge der auf das Dichtelement 29 wirkenden Anpresskraft derart elastisch oder plastisch deformiert wird, dass es zu einer Reduktion der Anpresskraft kommt. Mit anderen Worten, das Trägerteil muss so starr sein, dass sein umlaufender Randbereich nicht zusammen mit dem daran angeordneten Dichtelement 29 nach unten (d.h. von der Unterseite der Bodenplatte 3 weg) gebogen wird.

Das Dichtelement 29 und die Unterseite der Bodenplatte 3 sind vorzugsweise so gestaltet, dass die Unterseite des Dichtelements 29 über die Unterseite der Bodenplatte 3 derart hinausragt, dass das Gehäuse ausschließlich auf der Unterseite des Dichtelements 29 aufliegt, wenn das Gehäuse einschließlich des vormontierten Dichtelements auf eine ebene Unterlage gestellt wird. Hierdurch wird eine Beschädigung der Unterseite des Gehäuses, beispielsweise ein Verkratzen, vermieden. Zudem werden Stöße beim Aufsetzen des Gehäuses bzw. der fertig vormontierten Wägezelle auf eine Unterlage abgemildert, so dass die Gefahr einer Beschädigung der mechanisch empfindlichen Teile der Wägezelle reduziert wird.

Bei der Montage des Gehäuses auf dem Trägerelement 7, das beispielsweise Teil eines Maschinengestells sein kann, wird das Dichtelement 29 zusätzlich mit einer vertikal wirkenden Anpresskraft beaufschlagt, die beispielsweise durch die in Fig. 1 und Fig. 4 dargestellte Schraubverbindung (Schraube 23) erzeugt werden kann. Hierdurch wird zum einen die Anpresskraft zwischen der Oberseite des Dichtelements 29 und den Unterseiten 3a, 5c der umlaufenden Seitenwandung 5b bzw. des äußeren Randbereichs der Bodenplatte 3 erhöht. Zum anderen ergibt sich eine ausreichende Anpresskraft zwischen der Unterseite des Dichtelements 29 und der Auflagefläche auf dem Trägerelement 7, so dass der Raum unterhalb der Unterseite der Bodenplatte 3 und innerhalb des ringförmigen Dichtelements 29 abgedichtet wird.

Die Bodenplatte 3 kann zur Erzeugung einer definierten Anpresskraft Flanschvorsprünge 39 aufweisen, die das Trägerteil 31 in den Durchbrüchen 37 durchgreifen. Die Gewindebohrungen für eine oder mehrere Schrauben 23 zur Montage des Gehäuses 1 auf dem Trägerelement 7 sind in diesem Fall vorzugsweise an der Unterseite der Flanschvorsprünge 39 vorgesehen, wie dies in den Fig. 1 und 4 dargestellt ist.

Da das Dichtelement 29 in vertikaler Richtung im nicht-montierten Zustand des Gehäuses 1 auf dem Trägerelement 7 nach unten über die Unterseite der Bodenplatte 3 hinausragt, wird beim Anziehen der Schrauben 23 eine entsprechende Dichtwirkung erzeugt. Die Flanschvorsprünge 39 und der Querschnitt des Dichtelements 29 werden dabei vorzugsweise so aufeinander abgestimmt, dass bei der Montage des Gehäuses 1 auf dem Trägerelement 7 die Schraubverbindung fest angezogen werden kann, bis die Flanschvorsprünge 39 auf der Oberfläche des Trägerelements 7 aufliegen. Wird ab dem Zustand des ersten Aufliegens der Flanschvorsprünge 39 auf dem Trägerelement 7 die Montagekraft durch ein weiteres Anziehen der Schrauben 23 erhöht, bleibt dennoch die Anpresskraft zwischen den Unterseiten 5c und 3a des Gehäuses 1 und der Oberseite des Trägerelements 7 konstant. Damit kann eine Überlastung des Dichtelements 29 vermieden und die Montage deutlich vereinfacht werden.

Der bzw. die Flanschvorsprünge 39 können auch zusätzlich dem Zweck dienen, eine exakte Positionierung des Trägerteils 31 zusammen mit dem Dichtelement 29 an der Unterseite der Bodenplatte 3 bzw. des Gehäuses 1 zu gewährleisten. Hierzu können die Durchbrüche 37 im Trägerteil 1 eine geeignete Geometrie aufweisen, die in Verbindung mit der Geometrie der Seitenwandungen der Flanschvorsprünge 39 eine exakte Positionierung des Trägerteils 31 bzw. des damit verbundenen Dichtelements 29 in der horizontalen Ebene bzw. der Ebene der Unterseite der Bodenplatte 3 gewährleistet. Beispielsweise kann die Form der Durchbrüche 37 der Form des Außenumfangs der Flanschvorsprünge 39 entsprechen.

Das Gehäuse 1 bietet damit den Vorteil einer im montierten Zustand gewährleisteten, äußerst einfachen und wirksamen Abdichtung sowohl des Gehäuses 1 gegenüber dem Trägerelement 7 als auch des Gehäuses 1 selbst (bzw. des Gehäuseoberteils 5 gegenüber der Bodenplatte 3).

Das Gehäuseoberteil 5 kann demontiert werden, ohne dass das übrige Gehäuse einschließlich der darin aufgenommenen Wägevorrichtung vom Trägerelement 7 demontiert werden müsste. Wartungsarbeiten an der Wägevorrichtung im Inneren des Gehäuses 1 sind somit einfach möglich.

Des Weiteren kann das Dichtelement 29 zusammen mit dem Trägerteil 31 auf einfache Weise ausgetauscht werden. Hierzu muss das Gehäuse 1 nicht geöffnet werden.

Das Dichtelement 29 ist von außen erkennbar, so dass der Zustand des Dichtelements auf einfache Weise einer Sichtprüfung unterzogen werden kann.

Es können für unterschiedliche Einsatzzwecke ein und derselben Wägezelle unterschiedliche Dichtelemente verwendet werden, die sich beispielsweise in Material und Querschnittsgeometrie unterscheiden. Die verschiedenen Dichtelemente können auch an unterschiedlichen Trägerteilen angeordnet sein, die sich ebenfalls hinsichtlich des Materials und der Geoemetrie (z.B. hinsichtlich der Stärke eines plattenförmigen Materials) unterscheiden. Das Dichtelement 29 kann dabei jeweils eine charakteristische Farbe aufweisen, beispielsweise eine Farbe, die anzeigt, dass das Dichtelement bzw. die Kombination aus Dichtelement und Trägerteil für die Verwendung in der Lebensmittelindustrie vorgesehen und geeignet ist.

Die modulartige Kombination von Dichtelement und Trägerteil führt des Weiteren zu dem Vorteil, dass weder im Gehäuse noch im Trägerelement eine oder mehrere Ausnehmungen, z.B. Nuten, eingebracht werden müssen, um eine Stabilisierung des Dichtelements gegenüber einem mechanischen Kriechen infolge der Dichtkräfte zu vermeiden.

### Bezugszeichenliste

- 1: Gehäuse
- 3: Bodenplatte,
- 3a: Unterseite
- 5: Gehäuseoberteil
- 5a: Deckelwandung
- 5b: Seitenwandung
- 5c: untere Stirnseite
- 7: Trägerelement
- 9: Durchbruch
- 11: erstes Labyrinthdichtungsteil
- 12: zweites Labyrinthdichtungsteil
- 13: Ringraum
- 15: Rahmen
- 17: Strebe
- 19: Schraube
- 21: Bohrung
- 23: Schraube
- 25: Steckverbindung
- 27: Zugangsöffnung
- 29: Dichtelement
- 31: Trägerteil
- 33: Durchbruch
- 35: Durchbruch
- 37: Durchbruch
- 38: Schraube
- 39: Flanschvorsprung

## Patentansprüche

1. Gehäuse für eine Wägevorrichtung, welches mit einem Trägerelement verbindbar ist,
(a) mit einer Bodenplatte (3), auf welcher die Wägevorrichtung montierbar ist oder welche mit der Wägevorrichtung oder einer Komponente der Wägevorrichtung einstückig ausgebildet ist,
(b) mit einem an der Unterseite des Gehäuses (1) angeordneten, umlaufenden elastischen Dichtelement (29), welches so ausgebildet ist, dass die Bodenplatte (3) in einem äußeren ringförmigen Umfangsbereich der Unterseite (3a) der Bodenplatte (3) gegenüber der Oberfläche des Trägerelements (7) bei einem Aufsetzen des Gehäuses (1) auf die Oberfläche des Trägerelements (7) und einem Anpressen des Gehäuses (1) gegen die Oberfläche des Trägerelements (7) abgedichtet wird, und
(c) mit einem mit der Bodenplatte (3) verbundenen Gehäuseoberteil (5) mit einer Deckelwandung (5a) und einer umlaufenden Seitenwandung (5b), wobei die Seitenwandung (5b) die umlaufende Seitenwandung der Bodenplatte (3) umgreift und wobei die untere Stirnfläche (5c) der Seitenwandung (5b) im montierten Zustand des Gehäuses (1) auf dem Trägerelement (7) einen über den Außenumfang der Bodenplatte (3) hinausragenden Bereich des Dichtelements (29) zur Abdichtung der Seitenwandung (5b) gegenüber der Bodenplatte (3) beaufschlagt.

2. Gehäuse nach Anspruch 1, **dadurch gekennzeichnet, dass** das Gehäuse (1) ausschließlich durch eine mechanische Verbindung der Bodenplatte (3) mit dem Trägerelement (7) auf dem Trägerelement (7) montierbar ist, vorzugsweise durch eine Schraubverbindung, und dass das Gehäuseoberteil (5) ausschließlich über eine mechanische Verbindung mit der Bodenplatte (3) verbunden ist, vorzugsweise durch eine Schraubverbindung.

3. Gehäuse nach Anspruch 1 oder 2, **dadurch gekennzeichnet, dass** das Dichtelement (29) am Außenumfang eines Trägerteils (31) vorgesehen ist, wobei das Trägerteil (31) vorzugsweise als Trägerplatte ausgebildet ist.

4. Gehäuse nach Anspruch 3, **dadurch gekennzeichnet, dass** das Trägerteil (31) so ausgebildet ist, dass es mit einem umlaufenden Randbereich oder mit Teilbereichen des Randbereichs in das Dichtelement (29) eingreift, wobei das Dichtelement (29) vorzugsweise so am Trägerteil (31) vorgesehen ist, dass es in der Beaufschlagungsrichtung durch die Bodenplatte (3) beidseitig über den Randbereich des Trägerteils (31) hinausragt.

5. Gehäuse nach Anspruch 3 oder 4, **dadurch gekennzeichnet, dass** das Trägerteil (31) im Randbereich oder in den Teilbereichen des Randbereichs Durchbrüche (33) aufweist, in welche entsprechende Bereiche des Dichtelements (29) zur Fixierung des Dichtelements (29) am Trägerteil (31) eingreifen.

6. Gehäuse nach einem der Ansprüche 3 bis 5, **dadurch gekennzeichnet, dass** das Dichtelement (29) aus einem elastischen Kunststoff besteht und vorzugsweise durch Umspritzen des Trägerteils (31) hergestellt ist.

7. Gehäuse nach einem der Ansprüche 3 bis 6, **dadurch gekennzeichnet, dass** das Dichtelement (29) und das Trägerteil (31) derart ausgebildet und so an der Unterseite des Gehäuses (1) angeordnet sind, dass im montierten Zustand von Gehäuseoberteil (5) und Bodenplatte (3) eine ausreichende Abdichtung der Seitenwandung (5b) des Gehäuseoberteils (5) gegenüber der Bodenplatte (3) und damit eine ausreichende Abdichtung des Gehäuseinneren auch ohne eine Anpresskraft zwischen dem Gehäuse (1) und dem Trägerelement (7) gewährleistet ist.

8. Gehäuse nach einem der Ansprüche 3 bis 7, **dadurch gekennzeichnet, dass** das Trägerteil (31) einen oder mehrere Durchbrüche (37) aufweist, welche von an der Unterseite der Bodenplatte (3) ausgebildeten Flanschvorsprüngen (39) durchgriffen sind, wobei die Flanschvorsprünge (39) Anlageflächen aufweisen, die in dem Zustand, in welchem das Gehäuse (1) auf dem Trägerelement (7) montiert ist, auf dem Trägerelement (7) aufliegen, wobei das Dichtelement (29) in Bezug auf die Flanschvorsprünge (39) so ausgebildet ist, dass es im montierten Zustand des Gehäuses (1) auf dem Trägerelement (7) eine die Dichtfunktion gewährleistende elastische Deformation aufweist.

9. Gehäuse nach einem der Ansprüche 3 bis 8, **dadurch gekennzeichnet, dass** die Bodenplatte (3) derart ausgebildet und das Dichtelement (29) und das Trägerteil (31) derart ausgebildet und so an der Unterseite des Gehäuses (1) angeordnet sind, dass im montierten Zustand von Gehäuseoberteil (5) und Bodenplatte (3) das Gehäuse (1) ausschließlich mittels des Dichtelements (29) auf einer ebenen Oberfläche aufliegt, solange das Gehäuse (1) nicht mit einer zusätzlichen Anpresskraft in Richtung auf die ebene Oberfläche beaufschlagt wird.

10. Gehäuse nach einem der vorhergehenden Ansprüche, **dadurch gekennzeichnet, dass** die Seitenwandung (5b) des Gehäuseoberteils (5) mit ihrer das Dichtelement (29) beaufschlagenden Stirnseite (5c) über die Unterseite (3a) des das Dichtelement (29) beaufschlagenden Randbereichs der Bodenplatte (3) hinausragt.

11. Gehäuse nach einem der vorhergehenden Ansprüche, **dadurch gekennzeichnet, dass** mit der Bodenplatte (3) ein Rahmen (15) zur Montage des Gehäuseoberteils (5) verbunden oder einstückig mit dieser ausgebildet ist und dass das Gehäuseoberteil (5) so mit dem Rahmen (15) verbindbar oder verbunden ist, dass eine für die Dichtwirkung ausreichende Anpresskraft für das Anpressen der Stirnseite (5c) der Seitenwandung (5b) des Gehäuseoberteils (5) gegen das Dichtelement (29) erzeugbar ist.

12. Gehäuse nach einem der vorhergehenden Ansprüche, **dadurch gekennzeichnet, dass** die Bodenplatte (3) innerhalb des Randbereichs, welcher im montierten Zustand des Gehäuses (1) auf dem Trägerelement (7) gegenüber dem Trägerelement (7) abgedichtet ist, einen oder mehrere Durchbrüche (27) und/oder einen oder mehrere über die Unterseite der Bodenplatte (3) kontaktierbare elektrische Kontakte, vorzugsweise in Form einer Steckverbindung (25), aufweist.

## Claims

1. A housing for a weighing device which can be connected to a carrier element,
(a) having a base plate (3) on which the weighing device can be mounted or which is formed so as to be integral with the weighing device or a component of the weighing device,
(b) having a circumferential elastic sealing element (29) that is arranged on the underside of the housing (1) and is formed so that the base plate (3) is sealed in an outer annular peripheral area of the underside (3a) of the base plate (3) with respect to the surface of the carrier element (7) when the housing (1) is set upon the surface of the carrier element (7) and the housing (1) is pressed against the surface of the carrier element (7), and
(c) having a housing upper portion (5), which is connected to the base plate (3), with a cover wall (5a) and a circumferential side wall (5b), wherein the side wall (5b) encompasses the circumferential side wall of the base plate (3), and wherein the lower end face (5c) of the side wall (5b), in the state in which the housing (1) is mounted on the carrier element (7), impinges upon an area of the sealing element (29) that projects out beyond the outer periphery of the base plate (3) in order to seal the side wall (5b) with respect to the base plate (3).

2. A housing according to claim 1, **characterised in that** the housing (1) can be mounted on the carrier element (7) exclusively by means of a mechanical connection of the base plate (3) with the carrier element (7), preferably by means of a screw connection, and **in that** the housing upper portion (5) is connected exclusively by way of a mechanical connection with the base plate (3), preferably by means of a screw connection.

3. A housing according to claim 1 or 2, **characterised in that** the sealing element (29) is provided on the outer periphery of a carrier portion (31), wherein the carrier portion (31) is preferably formed as a carrier plate.

4. A housing according to claim 3, **characterised in that** the carrier portion (31) is formed in such a way that it engages with a circumferential edge area or with partial areas of the edge area into the sealing element (29), wherein the sealing element (29) is preferably provided on the carrier portion (31) so that it projects in the direction of impingement through the base plate (3) on both sides out beyond the edge area of the carrier portion (31).

5. A housing according to claim 3 or 4, **characterised in that** the carrier portion (31) has in the edge area or in the partial areas of the edge area openings (33) into which corresponding areas of the sealing element (29) engage for fixation of the sealing element (29) on the carrier portion (31).

6. A housing according to one of claims 3 to 5, **characterised in that** the sealing element (29) consists of an elastic plastics material and is preferably produced by injection-moulding around the carrier portion (31).

7. A housing according to one of claims 3 to 6, **characterised in that** the sealing element (29) and the carrier portion (31) are formed in such a way and are arranged on the underside of the housing (1) so that in the mounted state of the housing upper portion (5) and base plate (3) sufficient sealing of the side wall (5b) of the housing upper portion (5) with respect to the base plate (3) and thus sufficient sealing of the interior of the housing is guaranteed even without a pressing force between the housing (1) and the carrier element (7).

8. A housing according to one of claims 3 to 7, **characterised in that** the carrier portion (31) has one or more openings (37), through which flange projections (39) formed on the underside of the base plate (3) engage, wherein the flange projections (39) have locating faces which, in the state in which the housing (1) is mounted on the carrier element (7), rest on the carrier element (7), wherein the sealing element (29) is formed with respect to the flange projections (39) so that, in the state in which the housing (1) is mounted on the carrier element (7), it experiences an elastic deformation that guarantees the sealing function.

9. A housing according to one of claims 3 to 8, **characterised in that** the base plate (3) is formed in such a way and the sealing element (29) and the carrier portion (31) are formed in such a way and are arranged on the underside of the housing (1) so that in the mounted state of the housing upper portion (5) and base plate (3) the housing (1) rests exclusively by means of the sealing element (29) on a planar surface as long as no additional pressing force impinges upon the housing (1) in the direction of the planar surface.

10. A housing according to one of the preceding claims, **characterised in that** the side wall (5b) of the housing upper portion (5) projects with its end face (5c), impinging upon the sealing element (29), out beyond the underside (3a) of the edge area of the base plate (3), impinging upon the sealing element (29).

11. A housing according to one of the preceding claims, **characterised in that** a frame (15) for mounting the housing upper portion (5) is connected to the base plate (3) or is formed so as to be integral therewith, and the housing upper portion (5) can be connected or is connected to the frame (15) so that a pressing force that suffices for the sealing effect can be generated to press the end face (5c) of the side wall (5b) of the housing upper portion (5) against the sealing element (29).

12. A housing according to one of the preceding claims, **characterised in that** the base plate (3) has, within the edge area which is sealed with respect to the carrier element (7) in the state in which the housing (1) is mounted on the carrier element (7), one or more openings (27) and/or one or more electrical contacts, which can be contacted by way of the underside of the base plate (3), preferably in the form of a plug connection (25).

## Revendications

1. Boîtier pour un dispositif de pesage, lequel peut être relié à un élément de support,
(a) avec un panneau de fond (3), sur lequel le dispositif de pesage peut être monté ou lequel est réalisé d'un seul tenant avec le dispositif de pesage ou un composant du dispositif de pesage,
(b) avec un élément d'étanchéité (29) élastique périphérique disposé au niveau du côté inférieur du boîtier (1), lequel est réalisé de telle sorte que le panneau de fond (3) est étanchéifié dans une zone périphérique annulaire extérieure du côté inférieur (3a) du panneau de fond (3) par rapport à la surface de l'élément de support (7) lorsque le boîtier (1) est placé sur la surface de l'élément de support (7) et lorsque le boîtier (1) est pressé contre la surface de l'élément de support (7), et
(c) avec une partie supérieure de boîtier (5) reliée au panneau de fond (3) avec une paroi de couvercle (5a) et une paroi latérale (5b) périphérique, dans lequel la paroi latérale (5b) entoure la paroi latérale périphérique du panneau de fond (3) et dans lequel la face frontale (5c) inférieure de la paroi latérale (5b) sollicite, dans l'état monté du boîtier (1) sur l'élément de support (7), une zone, dépassant au-delà de la périphérie extérieure du panneau de fond (3), de l'élément d'étanchéité (29) aux fins de l'étanchéification de la paroi latérale (5b) par rapport au panneau de fond (3).

2. Boîtier selon la revendication 1, **caractérisé en ce que** le boîtier (1) peut être monté sur l'élément de support (7) exclusivement par une liaison mécanique du panneau de fond (3) à l'élément de support (7), de préférence par une liaison par vissage, et que la partie supérieure de boîtier (5) est reliée au panneau de fond (3) exclusivement par l'intermédiaire d'une liaison mécanique, de préférence par une liaison par vissage.

3. Boîtier selon la revendication 1 ou 2, **caractérisé en ce que** l'élément d'étanchéité (29) est prévu au niveau de la périphérie extérieure d'une partie de support (31), dans lequel la partie de support (31) est réalisée de préférence sous la forme d'un panneau de support.

4. Boîtier selon la revendication 3, **caractérisé en ce que** la partie de support (31) est réalisée de telle sorte qu'elle vient en prise par une zone de bord périphérique ou par des zones partielles de la zone de bord avec l'élément d'étanchéité (29), dans lequel l'élément d'étanchéité (29) est prévu de préférence au niveau de la partie de support (31) de telle sorte qu'il dépasse au-delà de la zone de bord de la partie de support (31) dans la direction de sollicitation de part et d'autre par le panneau de fond (3).

5. Boîtier selon la revendication 3 ou 4, **caractérisé en ce que** la partie de support (31) présente dans la zone de bord ou dans les zones partielles de la zone de bord des ajours (33), avec lesquels des zones correspondantes de l'élément d'étanchéité (29) viennent en prise aux fins de la fixation de l'élément d'étanchéité (29) au niveau de la partie de support (31).

6. Boîtier selon l'une quelconque des revendications 3 à 5, **caractérisé en ce que** l'élément d'étanchéité (29) est constitué d'une matière plastique élastique et est fabriqué de préférence par surmoulage de la partie de support (31).

7. Boîtier selon l'une quelconque des revendications 3 à 6, **caractérisé en ce que** l'élément d'étanchéité (29) et la partie de support (31) sont réalisés de telle manière et sont disposés au niveau du côté inférieur du boîtier (1) de telle sorte que sont garanties, dans l'état monté de la partie supérieure de boîtier (5) et du panneau de fond (3), une étanchéification suffisante de la paroi latérale (5b) de la partie supérieure de boîtier (5) par rapport au panneau de fond (3) et, ainsi, une étanchéification suffisante de l'intérieur de boîtier également sans une force de pression entre le boîtier (1) et l'élément de support (7).

8. Boîtier selon l'une quelconque des revendications 3 à 7, **caractérisé en ce que** la partie de support (31) présente un ou plusieurs ajours (37), qui sont traversés par des parties faisant saillie de bride (39) réalisées au niveau du côté inférieur du panneau de fond (3), dans lequel les parties faisant saillie de bride (39) présentent des faces d'appui, qui reposent sur l'élément de support (7) dans l'état dans lequel le boîtier (1) est monté sur l'élément de support (7), dans lequel l'élément d'étanchéité (29) est réalisé par rapport aux parties faisant saillie de bride (39) de telle sorte qu'il présente, dans l'état monté du boîtier (1) sur l'élément de support (7), une déformation élastique garantissant la fonction d'étanchéité.

9. Boîtier selon l'une quelconque des revendications 3 à 8, **caractérisé en ce que** le panneau de fond (3) est réalisé de telle manière et l'élément d'étanchéité (29) et la partie de support (31) sont réalisés de telle manière et sont disposés au niveau du côté inférieur du boîtier (1) de telle sorte que dans l'état monté de la partie supérieure de boîtier (5) et du panneau de fond (3), le boîtier (1) repose exclusivement au moyen de l'élément d'étanchéité (29) sur une surface plane tant que le boîtier (1) n'est pas sollicité par une force de pression supplémentaire en direction de la surface plane.

10. Boîtier selon l'une quelconque des revendications précédentes, **caractérisé en ce que** la paroi latérale (5b) de la partie supérieure de boîtier (5) dépasse, par son côté frontal (5c) sollicitant l'élément d'étanchéité (29), du côté inférieur (3a) de la zone de bord, sollicitant l'élément d'étanchéité (29), du panneau de fond (3).

11. Boîtier selon l'une quelconque des revendications précédentes, **caractérisé en ce qu'**un cadre (15) servant au montage de la partie supérieure de boîtier (5) est relié au panneau de fond (3) ou est réalisé d'un seul tenant avec ce dernier, et que la partie supérieure de boîtier (5) peut être reliée ou est reliée au cadre (15) de telle sorte qu'une force de pression suffisante pour l'action d'étanchéité peut être générée pour la pression du côté frontal (5c) de la paroi latérale (5b) de la partie supérieure de boîtier (5) contre l'élément d'étanchéité (29).

12. Boîtier selon l'une quelconque des revendications précédentes, **caractérisé en ce que** le panneau de fond (3) présente, à l'intérieur de la zone de bord, qui est étanchéifiée, dans l'état monté du boîtier (1) sur l'élément de support (7), par rapport à l'élément de support (7), un ou plusieurs ajours (27) et/ou un ou plusieurs contacts électriques pouvant être mis en contact par l'intermédiaire du côté inférieur du panneau de fond (3), de préférence sous la forme d'une liaison par enfichage (25).
